# EUROPEAN PATENT APPLICATION

(11) **EP 1 267 293 A1**
(43) Date of publication of application: **18.12.2002**
(21) Application number: 02254103.1
(22) Date of filing: 12.06.2002
(51) Int. Cl.: G06F 17/60

(54) **Systems and methods for trading in an exclusive market**

(30) Priority: 13.06.2001 US 297830 P
(71) Applicant: eSPEED, Inc., New York, NY 10171 (US)
(72) Inventor: Gilbert, Andrew C., Deceased (US); Stergiopoulos, Andrew, Deceased (US)
(74) Representative: Jones, David Colin

(57) **Abstract**

Systems and methods for providing traders with the ability to negotiate prices in an exclusive inside market. Using these systems and methods, traders are provided with a trading environment (inside market) that is reserved for traders associated with the best bids/offers of a general market. These traders are provided with the ability to submit new bids/offers to negotiate prices on the items available in the market. Traders can also submit counteroffers to re-negotiate prices on items. Likewise, traders can purchase or sell items in the inside market.

## Description

This application claims the benefit of United States Provisional Application No. 60/297,830, filed June 13, 2001, the disclosure of which is hereby incorporated by reference in its entirety.

### Background of the Invention

The present invention relates to systems and methods for providing trading systems, and more particularly to trading systems that allow traders to negotiate prices with other traders.

Electronically based trading systems have gained widespread popularity over the years. Such trading systems are frequently used for trading items ranging from financial instruments (such as stocks, bonds, currency, futures, contracts, etc.) to used household goods (such as old records, antiques, etc.). In many of these trading systems, bid/offer-hit/lift processes are used to negotiate a sale of a given item. In connection with such processes, bids and/or offers for items are entered into a trading system and a hit or take is submitted in response to a bid or offer, respectively, to agree to a sale.

Typically, bids and/or offers are submitted in a general market place that permits all other market participants or traders to negotiate prices and sizes of bids and/or offers. Such general market places typically provide traders with the ability to have multiple bids and/or offers in the trading system. Traders may place bids and/or offers in an anonymous fashion, so that their identity is not disclosed to other traders.

Traders may also want to participate in exclusive groups that are separate from the general market. Traders may not want to disclose their bids and/or offers to the general market, but rather to the best group of traders associated with best prices in the general market or with any other desired traders. Accordingly, it is an object of the present invention to provide systems and methods for trading in exclusive inside markets that are separate from the general market. In particular, the inside market may include best bids and offers and traders associated with those bids and offers.

### Summary of the Invention

In accordance with this and other objects of the invention, systems and methods provide traders with the ability to negotiate prices with other traders. In particular, in accordance with this invention, certain qualified traders can negotiate prices in an exclusive inside market.

In addition, this invention addresses the technical problem of providing an inside market that allows certain qualified traders to negotiate the prices and sizes of items with each other using an electronic trading system.

The inside market may be available to traders that are associated with the best prices in a general market. The general market may provide each qualified trader with the ability to submit bids, offers, buy commands, and sell commands. The general market may, for example, display a plurality of bids and offers with their respective bid and offer sizes in a market cell. This market cell may display a wide spectrum of prices. That is, the market cell may display several prices that deviate from the market price. The prices are typically displayed as a stack. The best bid price (i.e., highest price at which a trader is willing to buy an item) and best offer price (i.e., lowest price a trader is willing to sell an item) are listed at the top of a bid stack and an offer stack, respectively.

There may be several participants associated with the best bid and/or best offer. That is, several traders may have placed bids at or near to the best bid price and several traders may have place offers at or near to the best offer price. The "market price" as defined herein, constitutes prices that represent the best bid(s) and best offer(s). For example, if the bid price is 6.50 and the offer price is 6.40 at a given or predetermined volume, then the market price is 6.50 bid, 6.40 offer, or 6.45 mid. Therefore, the best bids and offers, as defined for this invention, have prices relatively close to the market price.

When the bid and offer prices are the same, the market is referred to as a "locked market", which operates under a different set or rules. For example, trades between a bidder and an offeror may be automatically executed in a locked market.

In accordance with the present invention, the inside market is available to qualified traders. Qualified traders may be traders that are associated with the best bids and offers. The best bids and offers are bids and offers in the general market that have prices that meet predetermined criteria. The predetermined criteria may include, for example, prices that are within a predetermined range of the market price (e.g., all bids and offers that are within 0.05 of the market price qualify for being admitted into the inside market) or when the number of users joined associated with the best price is greater than or equal to a predetermined number or when the spread (e.g., difference) between the bid and offer prices is less than a predetermined difference. When a particular trader meets the criteria and is granted access to the inside market, that trader may be provided with an opportunity to participate in an inside market. The inside market is similar with respect to the general market, except that only bid and offer prices that improve on the general market price will be accepted for this inside market session. Improved prices are prices that move prices closer to market, which may facilitate trading. Improving prices also enables traders to competitively price items in a market. Also, only those traders accepted into the inside market session will be able to trade within the inside market.

Once traders are provided with the opportunity to participate in the inside market, traders may negotiate prices, buy or sell items, submit counteroffers, or perform any other trading related task. When a bid or offer is submitted, the submission may be evaluated, according to conditions set by the present invention, to determine if the submission is valid for display in the inside market. If the submission of the bid or offer is valid, a distinctive character may be displayed to illustrate that this particular submission is an inside market bid or offer. The submission may be made distinctive by using, for example, highlighting, underlining, insertion of special characters (e.g., ***), insertion of acronyms (e.g., IMB for inside market bid), or any other suitable distinguishing marks.

As will be apparent upon reading the Detailed Description of the Preferred Embodiments, various features of the present invention may be implemented in conjunction with the use of inside markets. For example, as illustrated herein, the present invention may be used with a bid/offer, buy/sell trading system for trading of financial instruments, such as bonds. Likewise, as another example, the invention may be used with a matching system, wherein bids and offers are submitted by various traders and matched, for the trading of other items, such as materials and supplies for manufacturing.

### Brief Description of the Drawings

The above and other objects and advantages of the invention will be apparent upon consideration of the following detailed description, taken in conjunction with accompanying drawings, in which like reference refers to like parts throughout, and in which:
FIG. 1 is an illustration of a general market cell that may be generated in accordance with certain embodiments of the present invention;
FIG. 2 is an illustration of a dialog window that may be generated in accordance with certain embodiments of the present invention;
FIG. 3A is an illustration of a general market cell that may be generated in accordance with certain embodiments of the present invention;
FIG. 3B is an illustration of an inside market cell that may be generated in accordance with certain embodiments of the present invention;
FIG. 4 is a flow diagram of a main process that may be used to create and operate an inside market in accordance with certain embodiments of the present invention;
FIG. 5 is a flow diagram of a negotiation process that may be used to provide negotiations within an inside market in accordance with certain embodiments of the present invention;
FIG. 6 is a flow diagram appended to the negotiation process shown in FIG. 5 in accordance with certain embodiments of the present invention; and
FIG. 7 is a block diagram of a system that may be used to implement the processes and functions illustrated in FIGS. 1-6 in accordance with certain embodiments of the present invention.

### Detailed Description of the Preferred Embodiments

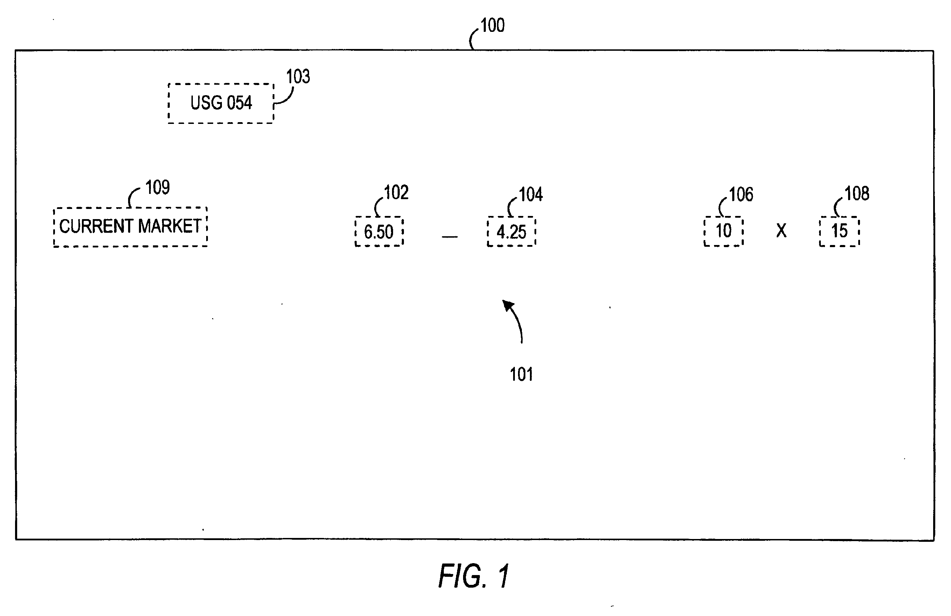

Turning to FIGS. 1-3, examples of screen displays that may be presented in certain embodiments of the present invention are illustrated. FIG. 1 shows a market cell 100 that may be used to display one or more bid and/or one or more offer 101 for an item to be traded. In particular, market cell 100 may be associated with prices posted by traders in a general market. A general market may be any market that provides each trader associated with that market with the ability to view other trader prices, place bids/offers, place hits/lifts, or any other suitable market related trading practice. As illustrated, bid and offer 101 indicates a price 102 which a buyer is willing to pay for a selected item 103 at a given size 106 (i.e., a number of the item) and a price 104 which a seller is willing to accept for selected item 103 at a given size 108. As also illustrated, market category 109 may be provided to categorize the bid(s)/offer(s) and associated sizes. For example, market category 109 may represent one or more bid and/or one or more offer 101 for a current market, a general market, an inside market, or any other suitable market.

Each component of a market shown in market cell 100 may be marked with a color, or in any other suitable manner, to indicate features of that component. For example, as shown in FIG. 1, the entire area of fields 102, 103, 104, 106, and 108 may be colored, or only the symbols in those fields may be colored, to assign a meaning to each field. As a further example, a specific color may be assigned to field 102 to indicate that a price in the field is a bid price. Preferably, a trader is able to specify the color assigned to each component of a trade. The fields, or symbols contained therein, may be continuously colored or may be shown in a chosen color when a mouse pointer is passed over each field or used to click on each field.

In order to bid for, offer to sell, buy, and/or sell an item through market cell 100, a trader may submit a trading command indicating the action to be taken using various approaches. For example, a trader may submit the trading command using a command-line interface, by clicking on components of bid and offer 101, and/or using a graphical interface.

When using a command-line interface, a trading command may be entered in any non-graphical interface desired. For example, a trader may submit a trading command by pressing buttons on a keyboard. Likewise, a trader could use a voice recognition system to enter commands verbally, or a trader could use some combination of voice recognition, keyboard, and pointing device.

A trader may also indicate a desire to bid, offer, buy, and/or sell an item by clicking on different portions of a bid and offer 101 for that item in market cell 100. For example, if the trader clicks on bid price 102, the trader may indicate to submit a bid for the item. If the trader clicks on offer price 104, the trader may indicate to submit an offer for the item. If the trader clicks on bid size 106, the trader may submit a command to sell the item. And, if the trader clicks on offer size 108, the trader may submit a command to buy the item.

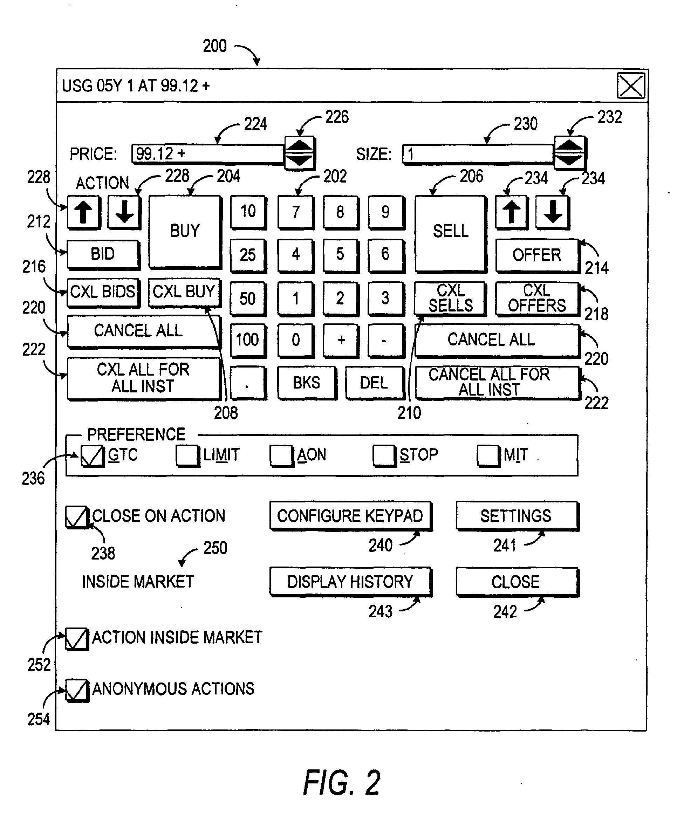

FIG. 2 illustrates one embodiment of a graphical interface for submitting trading commands. As shown, the graphical interface comprises a dialog window 200 with various buttons and entry fields 202-242. Using these buttons and entry fields, a trader may submit a bid command, an offer command, a buy command, or a sell command for an item corresponding to a market cell 100. Preferably, each traded item uses a unique dialog window 200. Dialog window 200 may be opened automatically and/or manually before, during, and/or after a trade, and may allow a trader to submit a trade command at any time. The dialog window may be repositioned on a trader's display and/or fixed in place. The trader, preferably, will keep the window associated with a particular instrument below the market cell 100 for the same tradable item. The number of dialog windows 200 that can be kept open at any one time is preferably unlimited.

As shown in FIG. 2, dialog window 200 may comprise a variety of on-screen buttons and entry fields. Generally, a button, as displayed in box 200, may be "pushed" by placing a pointing device's pointer over the button and pressing a switch on the pointing device, as is commonly known in the art. At the center of window 200, a numeric keypad 202 may be displayed. The numeric keypad 202 may provide buttons for numbers zero through nine, and may contain buttons for numbers ten, twenty-five, fifty, and one hundred or any other suitable or desirable values. The numeric keypad 202 may also contain a plus button ("+"), a minus button ("-"), a decimal point button ("."), a backspace button ("BKS"), and a delete button ("DEL").

In addition to displaying a numeric keypad as described above, dialog window 200 may also provide a user with a buy button 204, a sell button 206, a cancel buys button 208, a cancel sells button 210, a bid button 212, an offer button 214, a cancel bids button 216, a cancel offers button 218, cancel all buttons 220, cancel all for all instruments button 222, a price entry field 224, price up and down buttons 226, bid price up and down buttons 228, offer price up and down buttons 234, a size entry field 230, and size up and down buttons 232. Finally, dialog window 200 may contain a preference field 236 that allows a user to specify preferred types of orders, a close-on-action box 238 that causes dialog window 200 to be automatically closed after specified actions are performed, a configure keypad button 240 that allows a user to arrange the keypad for dialog window 200, a close button 242 that closes the dialog window 200 on demand, a settings button 241, and a display history button 243 that causes a history list of order entries to be display when pressed. The preference field may also contain an anonymous trades box 254 that allows a user to submit bids/offers, buy, sell, or submit counteroffers anonymously.

Persons skilled in the art will appreciate that the above discussion with respect to FIG. 2 is not intended to be an exhaustive description of various features that can be included in dialog window 200. It does, however, discuss many of the various features pertinent to enabling a user to interact with the trading system to place bids/offers and/or hits/lifts and other trading related commands. A more detailed description of the FIG. 2 is described in U.S. Patent Application Publication No. 2002-0029180 published March 7, 2002, which is hereby incorporated by reference in its entirety.

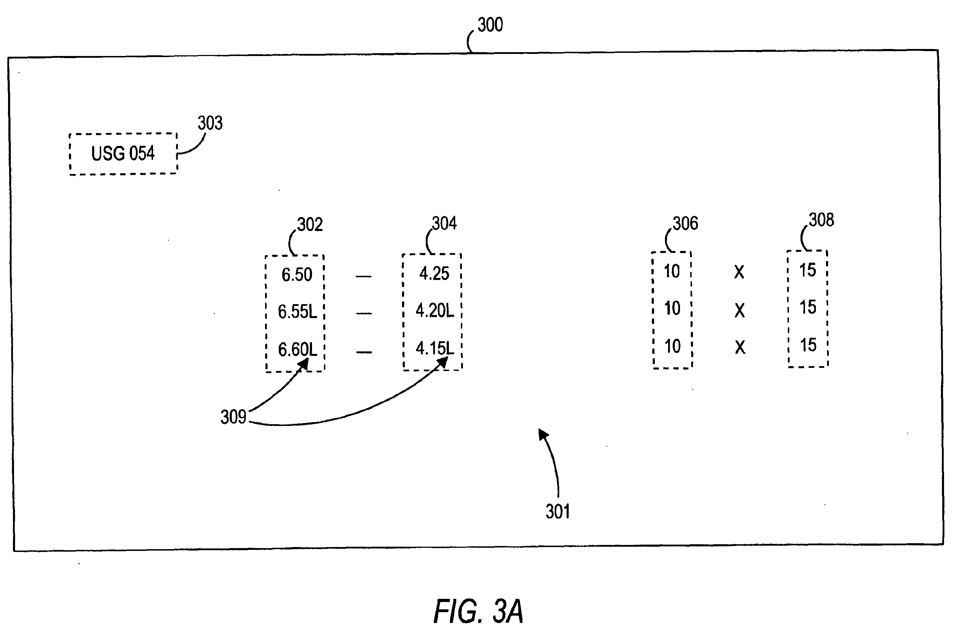

The graphical interface described in connection with FIG. 2 provides the user with the ability to submit bid commands, offer commands, or buy and sell commands for an item corresponding to market cell 100. However, market cell 100 is representative of a general market. General markets provide each trader associated with that market with the ability to trade items using the graphical interface of FIG. 2. Moreover, general market participants can view all trades (e.g., bids/offers) associated with a market such as that depicted in FIG. 3A. Inside markets, on the other hand, provide an exclusive market in which traders associated with the best bids/offers of the general market with the ability to negotiate with other traders participating within the inside market.

Qualified traders may be placed into an inside market when they have either a bid, an offer, or both that qualifies for entry into the inside market. The system of the present invention may select qualified market participants associated with the best bids/offers currently available in the general market for entry into the inside market. In another suitable approach, the system may select qualified market participants having bids/offers that fall within a predetermined spread of the best bids/offers. For example, if the spread is 0.10 and the best bid in the general market is 6.02, then a bid at 6.08 qualifies for entry into the inside market.

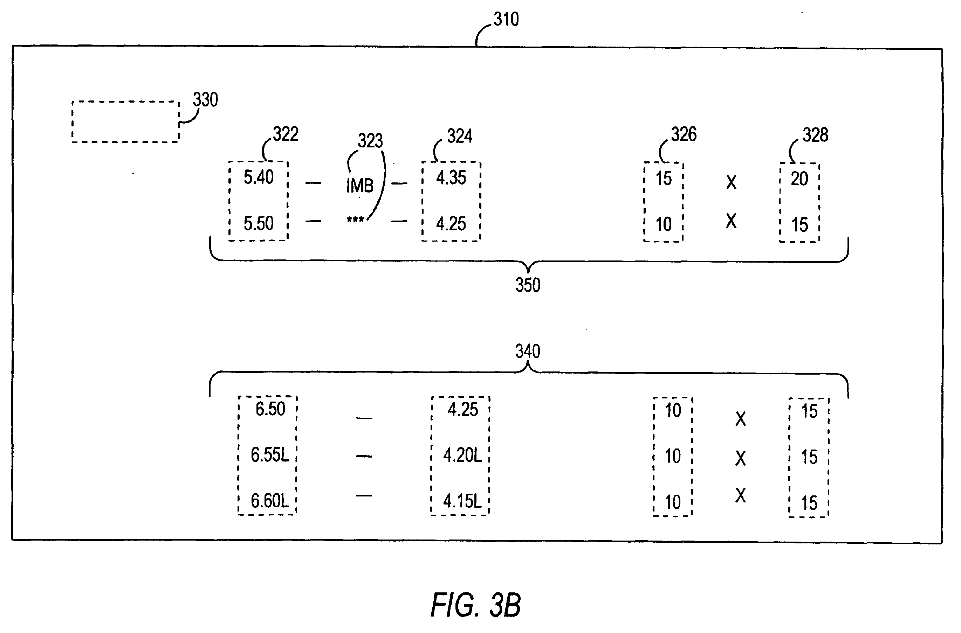

Once traders qualify to participate in the inside market, they may submit or negotiate bids and offers, buy or sell items, counteroffers, or perform any other trading related task using the graphical interface described in FIG. 2. When a particular trader is selected for an inside market, dialog window 200 may show inside market symbol 250 to indicate to the trader that inside market access is available. The trader may choose to participate in the inside market by selecting perform inside market actions box 252. Once box 252 is selected, the user may be presented with market cell 310, as shown in FIG. 3B, and each bid/offer submission, purchase, sale, or counteroffer thereafter (selection of box 252) may occur within the inside market.

In an alternative approach, another dialog window may be displayed that is specifically designated for inside markets to provide the user with the ability to interact with that inside market. In this way, the user may be provided with the ability to place trades in the general market using one dialog window and in the inside market using another dialog window substantially simultaneously. If a new dialog window is provided that is specifically designated for the inside market, it may not be necessary for the user to select market actions box 252. However, it may be necessary to select anonymous box 254 to submit anonymous bids, offers, purchase commands, or sale commands.

FIG. 3A illustrates a general market cell 300 which is available to all traders participating in general market. FIG. 3B illustrates an inside market cell 310 that is available to traders that qualify for inside market participation. An inside market, in accordance with the present invention, provides traders with the ability to submit bids/offers with other inside market participants to negotiate prices and sizes separate from the general market. Similar to FIG. 1, FIG. 3A shows at least one bid and offer 301 for a general market item to be traded. As illustrated, each bid and offer 301 may indicate a price 302 which buyers are willing to pay for a selected item 303 at a given size 306 (i.e., quantity of the item) and a price 304 which sellers are willing to accept for selected item 303 at a given size 308. As also illustrated, an associated code 309 may be associated with prices 302 and 304. Associated code 309 may represent preferences such as limit (L), all-or-nothing (A), stop (S), market-if-touched (I), or any other suitable type of order.

As shown in market cell 300, the bid(s)/offer(s) and their respective sizes are positioned such that the best prices are listed on top of their respective stack. The remaining bids and offers are positioned in a stack according to criteria such as price, size, time, and other related factors. FIG. 3A shows, for example, that the bids and offers are positioned in their respective stacks according to price. Starting at the top of the stack for bid 302, the bids are positioned from lowest to highest price. Starting at the top of the stack for offer 304, the offers are positioned from highest to lowest price. If two bids, for example, have the same price, then the bids may be positioned in the stack according to the time in which the bid was submitted to the system. Alternatively, the bids may be positioned according to size (e.g,. the bid with a larger size entered takes precedence over the bid with a smaller size).

FIG. 3B illustrates a market cell 310 that displays general market bids and offers 340 and inside market (IM) bids and offers 350 for the inside market item to be traded. General market bids and offers 340 are bids and offers that are associated with a general market (e.g., general market 300 of FIG. 3A). IM bid and offer 350 displays bids 322 having prices that improve upon or equal the price of the best bid in the general market (e.g., FIG. 3A) at a given sizes 326. Because FIG. 3B illustrates a yield market, improved bid prices are lower in price than existing general or inside market bid prices. IM bid and offer 350 also displays offer prices 324 that have prices that improve upon or equal the price of the best offer in the general market at a given size 328. Likewise, because market cell 310 shows a yield market, improved offers are higher in price than existing general or inside market offer prices.

The present invention may be configured to display IM bids and offers 350 only to traders that are invited to participate in the inside market session. Alternatively, IM bids and offers 350 may be displayed to all market participants, but can only be acted upon those traders that are invited to participate in the inside market session.

The identity of the trader associated with each IM bid and offer price 350 may or may not be disclosed. As illustrated in market cell 310, the trader's identity is anonymous (i.e., not shown). However, if the trader chooses to display his or her identity, it may be shown as identity cell 330, which is adjacent to a corresponding IM bid and offer 350.

IM bid and offer 350 may have a distinctive marker 323 to indicate to traders that a new IM bid and offer has been posted to the inside market. Distinctive marker 323 may be any suitable marker that differentiates the IM bid and offer 350 from other bids and offers in market cell 310. For example, the distinctive marker 323 may be a series of characters such as, ***, +++, etc., or acronyms such as -IMB- (inside market bid). Distinctive marker 323 may also place additional emphasis on IM bid and offer 320 by using, for example, highlighting, darkening, coloring, shading, or underlining the price or size being changed.

As shown in market cell 310, the IM bids and offers and their respective sizes are positioned such that the best prices are listed on top of their respective stacks. When a trader submits a new bid or offer that improves on existing bids or offers (e.g., IM bids or offers), the new bid or offer is placed on top of the existing postings, thus pushing the existing bids and offers down in the list. Inside market bid and offer prices posted during an inside market session have the positioning rules as those applied to general markets. Thus, the best IM bids and offers are displayed at the top of their respective stacks. In another embodiment, only the best IM bid or offer may be displayed at the top of its respective stack. In this embodiment, there may be several IM bids and offers, but only one of the IM bids and offers is shown in the stack.

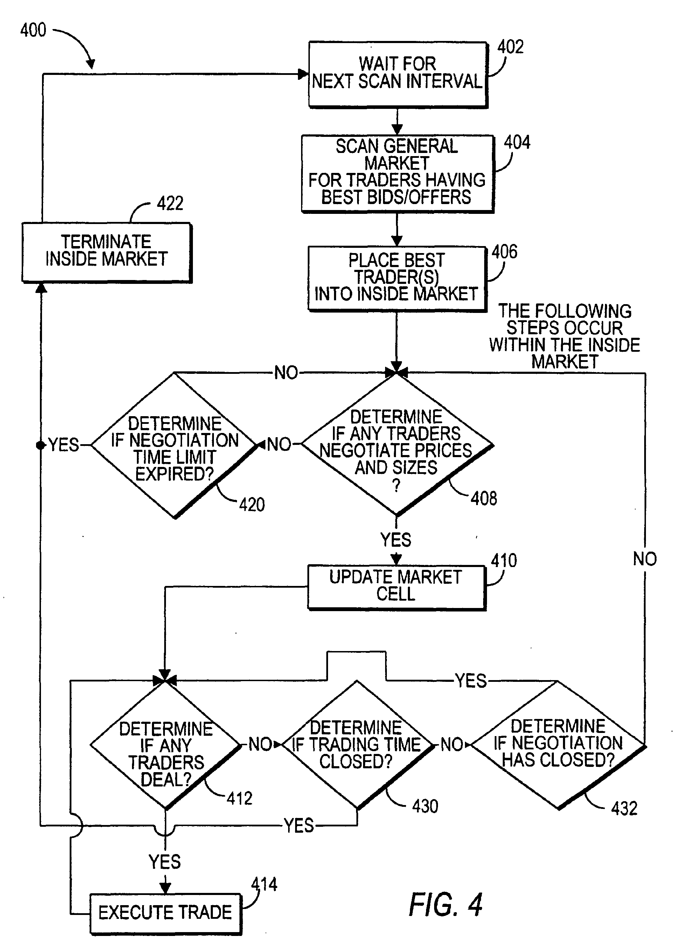

One embodiment of a main process 400 that may be used to control the process of providing an inside market in accordance with the principles of the present invention is illustrated in FIG. 4. As shown in FIG. 4, process 400 begins at step 402 by waiting for the next scan interval. A scan interval may be implemented so that the constantly changing data (e.g., prices and sizes) associated with the general market can be analyzed. For example, if the administrator desires a substantially continuous process 400, the administrator can set a wait interval for one-half second. On the other hand, if the administrator desires a more substantial wait interval, the interval time can be set at a substantially more periodic frequency of, for example, 10 seconds.

Once the scan interval time limit has expired, process 400 may proceed to step 404 where the general market is scanned for traders having the best bids and/or offers, or that meet other predefined critera. This step of the process provides the present invention with the ability to find the best bids/offers in the general market so that the traders associated with those best bids/offers can be placed into an inside market at step 406. If a trader does not meet the requirements for gaining access to the inside market, the trader may not be provided with the opportunity to participate in the inside market. Instead, the trader may continue to participate in the general market. The inside market may provide an exclusive trading market for traders associated with the best bid/offer prices from the general market.

As shown by step 408, process 400 may determine if traders negotiate for items in the market. Traders may negotiate by submitting bids/offers using dialog window 200 shown in FIG. 2. For example, a user may submit a bid that improves on existing bids in the inside market by entering a price in box 224 and selecting bid button 212. Once an improved bid/offer is submitted, the market cell may be updated, as shown in step 410, to reflect the improved bid/offer. The updated market cell may be, for example, illustrated as market cell 310 in FIG. 3B. Moreover, the new bid may have distinctive marker 323 associated with it to particularly point out the IM bid. However, if no negotiations take place, process 400 may proceed to step 420.

At step 420, the process may determine if the negotiation time limit has expired. A negotiation time limit dictates how long qualified market participants can participate in the inside market. The negotiation time limit may be set, for example, by the administrator. The administrator may set a minimum time and maximum time for allowing traders to negotiate. If the negotiation time limit has not expired, the process may loop back to step 408, otherwise the process may proceed to step 422.

At step 422, the inside market is terminated and the inside market traders are no longer provided with the exclusive inside market. After inside market termination, the former inside market traders can resume trading in the general market. The former inside market traders may not be able to participate in an inside market until the process restarts at step 402.

Returning back to the main flow of the process, step 412 may occur after the market cell is updated at step 410. At step 412, the process may determine if any of the traders trade items inside the market. A trade occurs when a trader sells in response to a bid or buys in response to an offer. If a trade does not occur, the process may proceed to step 430 where the process determines if the trading time limit has expired. The trading time limit may be imposed by the process once negotiations have commenced. For example, the trading time limit may reset each time a market participant negotiates an item by submitting a new bid, offer, or counteroffer. Alternatively, the trading time limit may be imposed once the IM is activated. The administrator may also set the length of time available for trading items in the inside market. A trading time limit can be imposed to prevent the inside market trading process from stalling. In addition, the trading time limit ensures that the inside market remains active when the negotiation time limit has expired. If the trading time has expired, the process proceeds to step 422, where the inside market terminates. However, if the trading time has not expired, the process may proceed to step 432.

At step 432, the system may check if the negotiation time limit has closed. This negotiation timer may be the same timer that step 420 relies on to determine when to terminate the inside market. If the negotiation time has closed, the process may loop back to step 412 to allow the traders to trade until the trading time expires. However, if the negotiation time limit has not expired, the process may loop back to step 408. This loop may provide traders with the opportunity to renegotiate prices, make counteroffers, etc.

Continuing from step 412, if a trader decides to trade, the process may proceed to step 414. Step 414 may execute the trade, confirm that the trade has been executed, and then return the process to step 412. For example, in a market as shown in FIG. 3B, if an inside market participant lifts a trade at $5.50 at a size of 5, then the system will execute the trade. Once the trade is executed, only the leftover portions of the original size, if any, will be displayed (e.g., in this case, a bid at $5.50 with a size of 5). IM participants can continue to trade until the trading time limit expires or a new negotiation is posted.

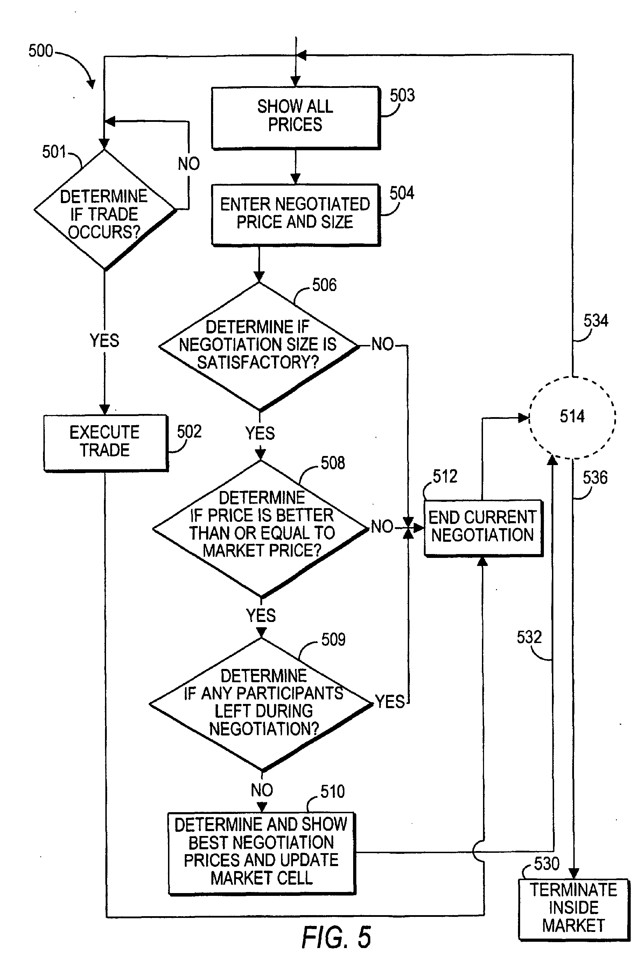

One embodiment of inside market process 500 of the present invention is shown in FIG. 5. Inside market process 500 illustrates a more detailed process of negotiations that may commence in an inside market. Process 500 shows two simultaneous flow paths that occur during process 500. One of the simultaneous flow paths first takes place at step 501. At step 501, the process checks to see if a trade occurs (e.g., IM participant sells or buys an item in response to a bid or offer, respectively). If no trade occurs, then the process continuously loops back to the beginning of step 501 to determine if a trade occurs. If a trade does take place, the process may proceed to step 502. At step 502, the trade is executed and process 500 moves on to step 512.

The other simultaneous flow path of process 500 begins at step 503. At step 503, the prices associated with the general market are displayed to each IM participant. FIG. 3B, for example, illustrates such a screen that shows bid and offer prices for a given market. In addition, once negotiations have commenced, step 503 may also show IM postings (e.g., bids and offers 350 of FIG. 3B). Once the best prices are shown, the process proceeds to step 504 where participants of the inside market are provided with the opportunity to negotiate prices and sizes for a particular item. For example, traders may use the interface described in conjunction with FIG. 2 to negotiate. When market participants enter negotiation prices and sizes, the process at step 506 determines if the negotiation sizes meets the minimum size requirement. The minimum size requirement may be configurable by an administrator. The minimum size requirement may also be subject to the regulations that are specific to the market in which the participants are trading.

If the negotiation price does not meet the minimum size requirement, then the process proceeds to step 512. At step 512, the process may end the current negotiation and proceed on to step 514. By ending the current negotiation, all submissions previously entered may be dismissed. On the other hand, if the size requirement is met, the process may proceed to step 508. At step 508, the process determines if the negotiation price is improved over or equal to existing market prices. The negotiation price should be improved or equal to prices selected from the general market and improved over any other bids or offers currently presented in the IM. In addition, if the negotiation price is equivalent to any existing bids or offers, the negotiation price should have an associated size that is at least equivalent to the existing market size. If the price is improved over the best and current market price, then the trader can bid/offer any size as long as it meets the general size requirement (as described above).

If the requirements at step 508 are not met, then the process proceeds to step 512. If the price requirements of step 508 are met, then the process proceeds to step 509. At step 509, the process may make an assessment to determine if any IM participants exited the inside market. The system may make this assessment by comparing the current number of participants to the number of participants present at the beginning of the current negotiation. If at least one participant has left the IM during negotiations, then all current negotiations may be dropped, after proceeding to step 512. If no participants have left during negotiations, then the process may proceed to step 510.

At step 510, the process shows the best negotiation price and updates the market cell. At step 510, only the best IM price may be shown. For example, if there are multiple market participants that submitted new prices for bids or offers, then only the participant that provided the best price out of the three will be presented to the rest of the participants in the IM. Moreover, if there are multiple participants that are submitting counteroffers, only the counteroffer with the best price will be shown to the other IM participants. If all the participants submit the exact same bid or offer, then each of their respective bids or offers may be posted. Once the best negotiation price is shown, the process may proceed to step 514.

Person skilled in the art will appreciate that all bids and offers, including IM bids and offer can be displayed to both IM participants and general market participants. General market participants, however, are not able to trade on IM market bids or offers.

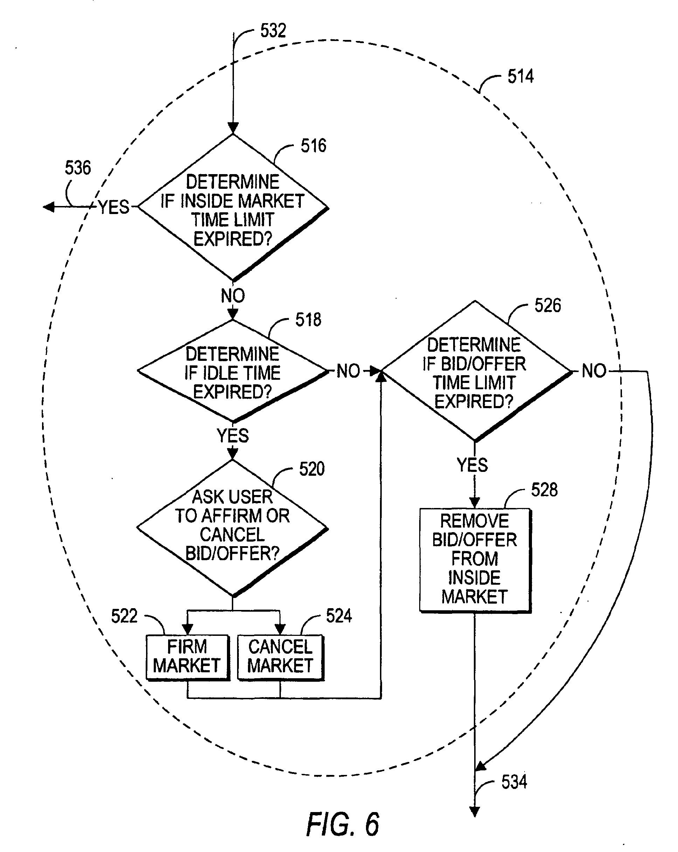

At step 514, the process may determine various time limits that may be imposed for certain portions of the negotiation process. In particular, step 514 is illustrated in FIG. 6 to more clearly depict the detailed steps involved with step 514. As shown in FIG. 5, process 500 proceeds to step 514 from steps 510 and 512. In FIG. 6, the process proceeds from point 532 to step 516. At step 516, the process may determine if the time limit for a particular IM has expired. The IM time limit may limit the total amount of time an IM can remain active. The IM time limit may be set by an administrator or can be dictated by the particular market in which the trader or traders are participating. If the time limit has expired, the process may proceed to point 536 and then continues to step 530, in FIG. 5. At step 530, process 500 may terminate the IM by removing the IM bids and offers and returning the IM participants back to the general market.

On the other hand, if the time limit has not expired, the process may proceed to step 518. At step 518, the process may determine if a bid/offer in the IM has been idle for a configurable period of time. The administrator may set the period of time and each user may also set the idle time period. If the bid/offer in the IM has been idle for the prescribed period of time, then the process may advance to step 520. Otherwise the process may proceed to step 526. At step 520, the system running the application may prompt the user to determine if the user desires a "firm" bid/offer or to cancel the bid/offer from the IM. A firm bid/offer may indicate that the trader wishes to negotiate and is satisfied with his or her current price submission. If the user desires to cancel the bid/offer, the process proceeds to step 524 and the system removes the bid/offer from the IM. After both steps 522 and 524, the process proceeds to step 526.

At step 526, the process may determine if the length of time a particular IM bid/offer is posted in the IM exceeds a predetermined time limit (e.g., bid/offer time limit). Similar to step 516, an administrator may also set the bid/offer time limit for step 526. For example, if the administrator set the IM bid/offer for ten seconds, then the IM bid/offer may only be displayed in the market cell for ten seconds. After the ten seconds have elapsed, the IM bid/offer may be removed from the IM, as shown in step 528. After the bid/offer is removed, the process proceeds to point 534. If the IM bid/offer time limit did not expire at step 528, the process also proceeds to point 534, which returns to the beginning of process 500 of FIG. 5.

In one suitable approach, the IM bid/offer time limit may be disabled if the trader desires a firm market in step 520. If a firm market has been established for such an IM bid/offer, then discarding the IM bid or offer based on elapsed time in step 526 would be counter-effective to providing a firm IM bid/offer. Therefore, firm bids and offers may not be discarded even if the time limit for that bid or offer has expired.

During the negotiation process, certain restrictions or requirements may be enforced throughout negotiations. For example, one embodiment of the present invention may include a locked inside market. If the inside market is locked, the prices associated with bid and offers can be locked. Therefore, in order for market participants to submit an IM bid/offer that is acceptable, the size of the bid/offer must be greater than the size of the locked bid/offer. In yet another embodiment, bids and offers that are "locked" at the same price, can automatically trade. That is, when the bidder and the offeror have negotiated to the same price, the system can automatically execute a trade between these two participants and provide each participant with confirmation.

In another embodiment, the IM can be configured to operate in conjunction with the rules applied to good-till-canceled (GTC), limit, all-or-none (AON), stop, and market-if-touched (MIT) market orders, or any other suitable market orders. The market orders associated with these types of specific inside markets may be configurable and can be set by both the administrator and the user.

FIG. 5 illustrates two separate flow paths to illustrate that once a trade occurs, all negotiations that are currently in process are discarded. For example, consider an IM that includes three participants. During negotiations, one participant trades (e.g., submits an order to perform a trade) while the other two participants place counteroffers. Once that trade is executed, all negotiations (e.g., bid, offers, and counteroffers) are discarded. In another example, if two or more IM participants trade, then the one who trades first is awarded with the trade.

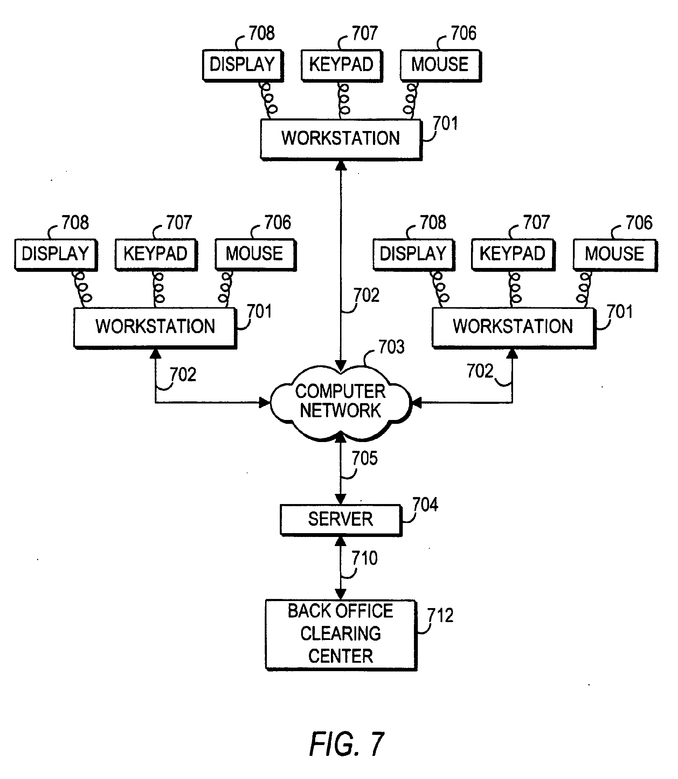

Referring to FIG. 7, an exemplary system 700 for implementing the present invention is shown. As illustrated, system 700 may include one or more trading workstations 701 that may include a mouse 706, a keypad 707, and a display 708. Workstations 701 may be local or remote, and are connected by one or more communications links 702 to a computer network 703 that is linked via a communications link 705 to a server 704.

In system 700, server 704 may be any suitable server, processor, computer, or data processing device, or combination of the same. Computer network 703 may be any suitable computer network including the Internet, an intranet, a wide-area network (WAN), a local-area network (LAN), a wireless network, a digital subscriber line (DSL) network, a frame relay network, an asynchronous transfer mode (ATM) network, a virtual private network (VPN), or any combination of any of the same. Communications links 702 and 705 may be any communications links suitable for communicating data between workstations 701 and server 704, such as network links, dial-up links, wireless links, hard-wired links, etc. Each workstation enables a participant to engage in the trading process. Workstations 701 may be personal computers, laptop computers, mainframe computers, dumb terminals, data displays, Internet browsers, Personal Digital Assistants (PDAs), two-way pagers, wireless terminals, portable telephones, etc., or any combination of the same.

A back office clearing center 712 may also be connected to server 704 of the trading system via communications link 710. Clearing center 712 may be any suitable equipment, such as a computer, or combination of the same, for causing trades to be cleared and/or verifying that trades are cleared. If desired, server 704 may contain multiple processors.

In addition to the above described features, the present invention also includes the following features as set forth below in numerical sequence.

37. A method for allowing qualified traders to negotiate prices and sizes of an item with other qualified traders, said qualified traders forming a portion of a group of traders, said method comprising:
providing a general market in which any of said group of traders can submit bids and/or offers for said item;
selecting said qualified traders from said group of traders participating in said general market, wherein said qualified traders are selected to participate in an inside market based on predetermined criteria;
allowing said qualified traders to negotiate prices and sizes of said item in said inside market.

38. The method of feature 37, further comprising:
arranging the bids and/or offers associated with each trader of said group in a bid stack or an offer stack, said arranging places the bids and/or offers in a prioritized order ranging from best price to worst price;
performing said selecting by choosing said traders associated with at least the best bid price listed in said bid stack; and
performing said selecting by choosing said traders associated with at least the best offer price listed in said offer stack.

39. The method according to feature 38, wherein said choosing comprises choosing at least one trader from said bid stack and at least one trader from said offer stack.

40. The method according to feature 37, wherein said selecting comprises selecting a predetermined number of traders from said group.

41. The method according to feature 37, wherein said predetermined criteria comprises a price of a bid or offer submitted by one of said traders of said group.

42. The method according to feature 37, wherein said allowing said qualified traders to negotiate comprises submitting bids and/or offers that have improve on the prices of other bids and/or offers of said general market.

43. The method according to feature 37, wherein said allowing said qualified traders to negotiate comprises submitting bids and/or offers that have improve on the prices of other bids and/or offers of said inside market.

44. The method according to feature 37, wherein said allowing said qualified traders to negotiate comprises submitting bids and/or offers that have the same price as a best bid and/or offer but have a size greater than the size associated with said best bid and/or offer.

45. The method according to feature 37, wherein said allowing said qualified traders to negotiate comprises providing a time limit for said qualified traders to negotiate.

46. The method according to feature 37, wherein said allowing said qualified traders to negotiate comprises executing a trade between at least two of said qualified traders.

47. The method according to feature 37, further comprising displaying a distinguishing mark to indicate to said qualified traders that an inside market bid and/or offer has been submitted.

48. The method according to feature 47, wherein said inside market bid and/or offer is a bid and/or offer submitted by one of said qualified traders.

49. The method according to feature 37, further comprising displaying a distinguishing mark to indicate to said group of traders that an inside market bid and/or offer has been submitted.

50. The method according to feature 37, further comprising terminating said inside market after a predetermined time period.

51. The method according to feature 37, further comprising terminating said inside market when one of said qualified traders buys or sells said item in said inside market.

52. The method according to feature 37, wherein said allowing said qualified traders to negotiate comprises submitting counteroffers of a bid and/or offer.

53. The method according to feature 37, wherein said allowing said qualified traders to negotiate comprises executing a trade for said item between two of said qualified traders.

54. The method according to feature 37, further comprising providing a locked inside market when said bid price and said offer price are the same, wherein when said locked inside market is provided, a trade between said qualified traders associated with a respective bid and offer is automatically executed.

Thus, systems and methods for providing an exclusive inside market are provided. One skilled in the art will realize that the present invention can be practiced by other than the described embodiments, which are presented for purposes of illustration and not of limitation, and that the present invention is limited only by the claims which follow.

## Claims

1. An apparatus that stores data representing an inside market in which qualified traders negotiate prices and sizes of an item with other qualified traders, said qualified traders form from a group of traders participating in a general market, said apparatus comprising:
a server comprising:
a server storage device having stored therein data identifying respective ones of said group of traders;
a server processor connected to said server storage device, said server storage device storing a server program for controlling said server processor; and
said server processor operative with said server program co select data from said server storage device representative of said qualified traders to participate in an inside market, said inside market comprises a market exclusive to said general market in that only said qualified traders can participate; and
a plurality of workstations, each of said plurality of workstations operative to communicate with said server, each of said workstations comprising:
a workstation storage device having stored therein data representing market information comprising bid and/or offer prices associated with said general market and said inside market,
a workstation processor connected to said workstation storage device, said workstation storage device storing a workstation program for controlling said workstation processor; and
said workstation processor operative with said workstation program to:
display market information co said qualified traders; and
receive data representing commands from said qualified traders that allow said qualified traders to negotiate prices and sizes of said item.

2. The apparatus of claim 1, further comprising:
a clearing center operative to communicate with said server, said clearing center comprising:
a clearing storage device having stored therein, data representing negotiation information comprising buy and sell commands received by said server;
a clearing processor connected to said clearing storage device, said clearing storage device that stores a clearing program for controlling said clearing processor; and
said clearing processor that is operative with said clearing program to cause said buy and sell commands to be executed and to verify that said buy and sell commands are executed.

3. The apparatus according co claim 1, wherein said server processor is further operative to select data associated with said qualified traders based on predetermined criteria.

4. The apparatus according to claim 3, wherein said predetermined criteria comprises data representing a price of a bid or offer submitted by one of said group of traders.

5. The apparatus according to claim 1, wherein said server processor is further operative to select said data representing said qualified traders from a predetermined set of said data identifying respective ones of said.group of traders.

6. The apparatus according to claim 1, wherein said server processor is further configured to monitor said data representing commands received by said workstations to determine whether said data representing commands meet predetermined command criteria.

7. The apparatus according to claim 6, wherein said predetermined command criteria comprises data representing a price of a bid or offer received submitted by said server that exceeds or is equivalent to said data representing market information.

8. The apparatus according to claim 6, wherein said predetermined command criteria comprises data representing a bid or offer received by one of said server that exceeds or is equivalent to the best price of a bid and/or offer in said inside market.

9. The apparatus according to claim 1, wherein said data representing market information comprises data related to sizes associated with said displayed bid and/or offer prices associated with said general market.

10. The apparatus according to claim 1, wherein said data representing market information comprises data related to sizes associated with said displayed bid and/or offer prices associated with said inside market.

11. The apparatus according to claim 1, wherein said server is further operative to control a timer that dictates a predetermined time limit for said qualified traders to negotiate.

12. The apparatus according to claim 1, wherein said server is operative to execute data transactions of negotiation data transmitted by at least two of said plurality of workstations.

13. The apparatus according to claim 1, wherein said workstation program is further operative to display a distinguishing mark on said plurality of workstations to indicate that data representing an inside market bid and/or offer has been received by said server.

14. The apparatus according to claim 13, wherein said inside market bid and/or offer is data representative of a bid and/or offer submitted by one of said qualified traders.

15. The apparatus according to claim 1, wherein said server is further operative to remove said data representative of said qualified traders from sever storage device after a predetermined period of time.

16. The apparatus according to claim 1, wherein said server processor is further operative to remove said data representative of said qualified traders from said server storage device when said server receives a data command to buy or sell said item in said inside market.

17. The apparatus according to claim 1, wherein said workstation processor is further operative to receive data representing a counter offer to a bid and/or offer.

18. An electronic trading system for providing an exclusive trading environment for qualified traders to negotiate prices and sizes of an item, comprising a plurality of workstations, a digital processing unit, and a computer network for providing communications between said plurality of workstations and said digital processing unit, wherein said digital processing unit comprises:
means for selecting data representing said qualified traders from data representing a group of traders participating in a general market, wherein said data representing said qualified traders are selected based on predetermined criteria;
means for receiving negotiation data representing negotiation of prices and sizes of said item by said qualified traders; and
means for transferring said negotiation data to said digital processing unit via said computer network; and
means for executing said negotiation data with said digital processing unit.

19. The system according to claim 18, wherein said digital processing unit further comprises:
means for arranging data representing bids and/or offers associated with said general market, said arranging places said data representing bids and/or offers in a prioritized order ranging from best price to worst price;
means for performing said means for selecting by choosing a portion of said data representing said group of traders associated with at least the best bid price listed in a bid data stack; and
means for performing said means for selecting by choosing a portion of said data representing said group of traders associated with at least the best offer price listed in an offer data stack.

20. The system according to claim 19, wherein said digital processing unit further comprises means for choosing data representing at least one trader from said bid data stack and data representing at least one trader from said offer data stack.

21. The system according to claim 18, wherein said digital processing unit further comprises means for selecting a predetermined set of data representing said qualified traders from said data representing a group of traders.

22. The system according to claim 18, wherein said predetermined, criteria comprises data representing a price of a bid or offer received by said digital processing unit.

23. The system according to claim 18, wherein said digital processing unit comprises means for receiving data representing bids and/or offers chat improve on data representing prices of bids and/or offers of said general market.

24. The system according to claim 18, wherein said digital processing unit comprises means for receiving data said representing bids and/or offers that improve on data representing prices of bids and/or offers of said inside market.

25. The system according to claim 18, wherein said digital processing unit comprises means for providing a time limit for receiving said negotiation data.

26. The system according to claim 18. wherein said digital processing system comprises means for display a distinguishing mark to indicate that data representing inside market bid and/or offer has been received.

27. The system according to claim 18, wherein said digital processing unit comprises means for removing said data representing said qualified traders from an insider market database after a predetermined time period.

28. The system according to claim 18, wherein said digital processing unit comprises means for removing said data representing said qualified traders from an inside market database when said negotiation data comprises a buy or sell command.

29. The system according to claim 18, wherein said digital processing unit further comprises means for receiving data representing counteroffers to a bid and/or offer.

30. The system according to claim 18, wherein said means for executing negotiation data comprises means for confirming that said item has been bought or sold.

31. The system according to claim 18, wherein said digital processing unit further comprises automatically executing a trade when data representing a bid price and data representing an offer price are the same.
